# EUROPEAN PATENT APPLICATION

(11) **EP 4 723 700 A1**
(43) Date of publication of application: **08.04.2026**
(21) Application number: 23938780.6
(22) Date of filing: 29.05.2023
(51) Int. Cl.: H04W 8/24

(54) **METHOD AND APPARATUS FOR TRANSMITTING CAPABILITY INFORMATION, AND STORAGE MEDIUM**

(71) Applicant: Beijing Xiaomi Mobile Software Co., Ltd., Beijing 100085 (CN)
(72) Inventor: HU, Ziquan, Beijing 100085 (CN); TAO, Xuhua, Beijing 100085 (CN)
(74) Representative: Gunzelmann, Rainer
(86) International application number: PCT/CN2023/096940
(87) International publication number: WO 2024/243783

(57) **Abstract**

Provided in the present disclosure are a method and apparatus for transmitting capability information, and a storage medium. The method comprises: sending capability information to a network device, wherein the capability information is used for indicating whether a user equipment supports a measurement capability in a situation where a time-domain conflict is present between different measurement intervals in MUSIM communication. In the method in the present disclosure, a user equipment sends capability information to a network device, so as to report a measurement capability in a situation where a time-domain conflict is present between different measurement intervals in MUSIM communication, such that after learning of the capability of the user equipment, the network device can perform a rational configuration operation which is suitable for the capability of the user equipment.

## Description

### TECHNICAL FIELD

The disclosure relates to the field of wireless communication technologies, and in particular to a method and an apparatus for transmitting capability information, and a storage medium.

### BACKGROUND

A user equipment (UE) supporting multi-universal subscriber identity module (MUSIM) supports a plurality of card slots and may simultaneously connect to a plurality of networks. In the 3rd generation partnership project (3GPP), it is indicated that a MUSIM UE may simultaneously support the plurality of networks, for example, simultaneously support NW A and NW B. In this case, the NW A is a new radio (NR) network, and the NW B is an NR or a long term evolution (LTE) network.

### SUMMARY

The disclosure provides a method and an apparatus for transmitting capability information, and a storage medium.

In a first aspect, the disclosure provides a method for sending capability information. The method is performed by a user equipment (UE), including: sending capability information to a network device, in which the capability information indicates whether the UE supports a measurement capability when a time-domain conflict exists between different measurement gaps in multi-universal subscriber identity module (MUSIM) communication.

In a second aspect, the disclosure provides a method for receiving capability information. The method is performed by a network device in a first network, including: receiving capability information sent by a UE, in which the capability information indicates whether the UE supports a measurement capability when a time-domain conflict exists between different measurement gaps in MUSIM communication.

In a third aspect, the disclosure provides a communication apparatus. The apparatus includes: a transceiver module, configured to send capability information to a network device, in which the capability information indicates whether the UE supports a measurement capability when a time-domain conflict exists between different measurement gaps in MUSIM communication.

In a fourth aspect, the disclosure provides a communication apparatus. The apparatus includes: a transceiver module, configured to receive capability information sent by a UE, in which the capability information indicates whether the UE supports a measurement capability when a time-domain conflict exists between different measurement gaps in MUSIM communication.

In a fifth aspect, the disclosure provides a communication system. The communication system includes: a UE and a network device, in which the UE is configured to send capability information to the network device, in which the capability information indicates whether the UE supports a measurement capability when a time-domain conflict exists between different measurement gaps in MUSIM communication; and the network device is configured to receive the capability information sent by the UE.

In a sixth aspect, the disclosure provides a communication device. The communication device includes: one or more processors, configured to invoke instructions to cause the communication device to implement the method according to the first aspect, or to implement the method according to the second aspect.

In a seventh aspect, the disclosure provides a storage medium. The storage medium stores instructions that, when executed on a communication device, cause the communication device to implement the method according to the first aspect, or to implement the method according to the second aspect.

### BRIEF DESCRIPTION OF THE DRAWINGS

The figures described herein are used to provide further understanding of the embodiments of the disclosure and constitute a part of disclosure. The illustrative embodiments of the disclosure and their descriptions are used to explain the embodiments of the disclosure and do not constitute improper limitations on the embodiments of the disclosure.

The figures here are incorporated into the specification and constitute a part of the specification, showing that they conform to the embodiments of the disclosure, and are used together with the specification to explain the principles of the embodiments of the disclosure.
FIG. 1 is a schematic diagram illustrating an architecture of a wireless communication system according to an embodiment of the disclosure.
FIG. 2a is a schematic diagram illustrating interaction in a method for transmitting capability information according to an embodiment of the disclosure.
FIG. 2b is a schematic diagram of a measurement pattern of a measurement gap according to an embodiment of the disclosure.
FIG. 3 is a flowchart illustrating a method for sending capability information according to an embodiment of the disclosure.
FIG. 4 is a flowchart illustrating a method for receiving capability information according to an embodiment of the disclosure.
FIG. 5a is a block diagram illustrating a communication apparatus according to an embodiment of the disclosure.
FIG. 5b is a block diagram illustrating a communication apparatus according to an embodiment of the disclosure.
FIG. 6a is a block diagram illustrating a communication device according to an embodiment of the disclosure.
FIG. 6b is a block diagram illustrating a communication device according to an embodiment of the disclosure.

### DETAILED DESCRIPTION

Embodiments of the disclosure provide a method and an apparatus for transmitting capability information, and a storage medium.

The embodiments of the disclosure are not exhaustive, but are only illustrative, and are not intended to be a specific limitation on the protection scope of the disclosure. In the absence of contradiction, each step in a certain embodiment may be implemented as an independent embodiment, and respective steps may be arbitrarily combined. For example, a solution after removing some steps in a certain embodiment may also be implemented as an independent embodiment, and the order of the steps in a certain embodiment may be arbitrarily exchanged. In addition, the optional implementations in a certain embodiment may be arbitrarily combined; in addition, respective embodiments may be arbitrarily combined, for example, some or all steps of different embodiments may be arbitrarily combined, and a certain embodiment may be arbitrarily combined with the optional implementations of other embodiments.

In various embodiments of the disclosure, unless otherwise specified or there is a logical conflict, the terms and/or descriptions between the embodiments are consistent and may be referred to each other, and the technical features in different embodiments may be combined to form a new embodiment based on their internal logical relationships.

The terms used in the embodiments of the disclosure are only for the purpose of describing specific embodiments and are not intended to limit the disclosure.

In the embodiments of the disclosure, unless otherwise specified, elements expressed in the singular form, such as "a", "an", "the", "above", "said", "aforementioned", "this", etc., may mean "one and only one", or "one or more", "at least one", etc. For example, when using articles such as "a", "an", "the" in English translation, the noun after the article may be understood as a singular expression or a plural expression.

In the embodiments of the disclosure, "a plurality of" refers to two or more.

In some embodiments, the terms "at least one of", "one or more", "a plurality of", "multiple" etc. may be used interchangeably.

In the embodiments of the disclosure, descriptions such as "at least one of A, B, C..." and "A and/or B and/or C..." include the case where any one of A, B, C... exists alone, and also include the case of any combination of any plurality of items in A, B, C..., and each case may exist independently. For example, "at least one of A, B, and C" includes the case of A alone, B alone, C alone, the combination of A and B, the combination of A and C, the combination of B and C, and the combination of A, B, and C. For example, "A and/or B" includes the case of A alone, B alone, and the combination of A and B.

In some embodiments, expressions such as "in one case A, in another case B" and "in response to one case A, in response to another case B" may, depending on the context, include the following technical solutions: executing A regardless of B, that is, in some embodiments, A; executing B regardless of A, that is, in some embodiments, B; selectively executing A or B, that is, in some embodiments, one is selected from A and B to be executed; executing both A and B, that is, in some embodiments, both A and B are executed. The same applies similarly when there are more branches such as A, B, C, etc.

The prefixes such as "first" and "second" in the embodiments of the disclosure are only used to distinguish different descriptive objects, and do not constitute restrictions on the position, order, priority, quantity or content of the descriptive objects. For the statement of the descriptive objects, reference may be made to the description in the context of the claims or embodiments, and it should not constitute redundant restrictions due to the use of prefixes. For example, if the descriptive object is "field", the ordinal number before the "field" in the "first field" and the "second field" does not limit the position or order between the "fields", and the terms "first" and "second" do not limit whether the "fields" they modify are in the same message, nor do they limit the order of the "first field" and the "second field". For another example, if the descriptive object is "level", the ordinal number before the "level" in the "first level" and the "second level" does not limit the priority between the "levels". For another example, a number of descriptive objects is not limited by the ordinal number, and may be one or more. Taking the "first apparatus" as an example, a number of "apparatuses" may be one or more. In addition, the objects modified by different prefixes may be the same or different. For example, if the descriptive object is "an apparatus", then the "first apparatus" and the "second apparatus" may be the same apparatus or different apparatuses, and their types may be the same or different. For another example, if the descriptive object is "information", then the "first information" and the "second information" may be the same information or different information, and their contents may be the same or different.

In some embodiments, "including A", "including A", "used to indicate A", and "carrying A" may be interpreted as directly carrying A or indirectly indicating A.

In some embodiments, the terms such as "in response to...", "in response to determining...", "in the case of/that...", "at the time of...", "when...", "if...", "in case of/that...", etc. may be used interchangeably.

In some embodiments, the terms such as "greater than", "greater than or equal to", "not smaller than", "more than", "more than or equal to", "not less than", "higher than", "higher than or equal to", "not lower than", and "above" may be replaced with each other, and the terms such as "smaller than", "smaller than or equal to", "not greater than", "less than", "less than or equal to", "no more than", "lower than", "lower than or equal to", "not higher than", and "below" may be replaced with each other.

In some embodiments, the apparatus, etc. may be interpreted as physical or virtual, and their names are not limited to the names recorded in the embodiments. The terms such as "apparatus", "equipment", "device", "circuit", "network element", "node", "function", "unit", "section", "system", "network", "chip", "chip system", "entity", and "subject" may be used interchangeably.

In some embodiments, the terms such as "access network device (AN device)", "radio access network device (RAN device)", "base station (BS)", "radio base station", "fixed station", "node", "access point", "transmission point (TP)", "reception point (RP)", "transmission/reception point (TRP)" and the like may be used interchangeably.

In some embodiments, the terms such as "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client" and the like may be used interchangeably.

In some embodiments, the access network device, the core network device, or the network device may be replaced by the terminal. For example, various embodiments of the disclosure may also be applied to a structure in which the communication between the access network device, the core network device, or the network device and the terminal is replaced by the communication between multiple terminals (for example, device-to-device (D2D), vehicle-to-everything (V2X), etc.). In this case, the terminal may be set to have a structure that has all or part of functions of the access network device. In addition, the language such as "uplink" and "downlink" may also be replaced by the language corresponding to the communication between the terminals (for example, "side"). For example, the uplink channel, the downlink channel, etc. may be replaced by the side channel, and the uplink, the downlink, etc. may be replaced by the side link.

In some embodiments, the terminal may be replaced by the access network device, the core network device, or the network device. In this case, the access network device, the core network device, or the network device may also be configured to have a structure that has all or part of functions of the terminal.

In some embodiments, "obtain", "acquire", "get", "receive", "transmit", "send and/or receive" may be interchangeable, and may be interpreted as many meanings such as receiving from other entities, obtaining from a protocol, obtaining from a higher layer, obtaining by self-processing, autonomous implementation, etc.

In some embodiments, the terms such as "send", "emit", "report", "issue", "transmit", "send and/or receive" and the like may be used interchangeably.

In some embodiments, "predetermined" or "preset" may be interpreted as being pre-specified in a protocol, etc., or may be interpreted as an apparatus performing a pre-set action, etc.

In some embodiments, "determining" can be interpreted as "judging", "deciding", "judging", "calculating", "computing", "processing", "deriving", "investigating", "searching", "looking up", "searching", "inquiring", "ascertaining", "receiving", "transmitting", "inputting", "outputting, "accessing", "resolving", "selecting", "choosing", "establishing", "comparing", "assuming", "expecting", "considering", "broadcasting", "notifying", "communicating", "forwarding", "configuring", "reconfiguring", "allocating", "mapping", "assigning", etc., but is not limited herein.

In some embodiments, the determination or judgment may be performed by a value represented by 1 bit (0 or 1), or by a true/false value (Boolean value) represented by true or false, or by comparison of numerical values (for example, comparison with a predetermined value), but is not limited herein.

In some embodiments, "network" may be interpreted as apparatuses included in the network (e.g., access network device, core network device, etc.).

In some embodiments, "not expecting to receive" can be interpreted as not receiving on time domain resources and/or frequency domain resources, or as not performing subsequent processing on the data after receiving the data; "not expecting to send" can be interpreted as not sending, or as sending but not expecting the recipient to respond to the sent content.

In some embodiments, the acquisition of data, information, etc. may comply with the laws and regulations of the country where the data is obtained.

In some embodiments, data, information, etc. may be obtained with the user's consent.

In addition, each element, each row, or each column in the table of the embodiments of the disclosure may be implemented as an independent embodiment, and the combination of any elements, any rows, or any columns may also be implemented as an independent embodiment.

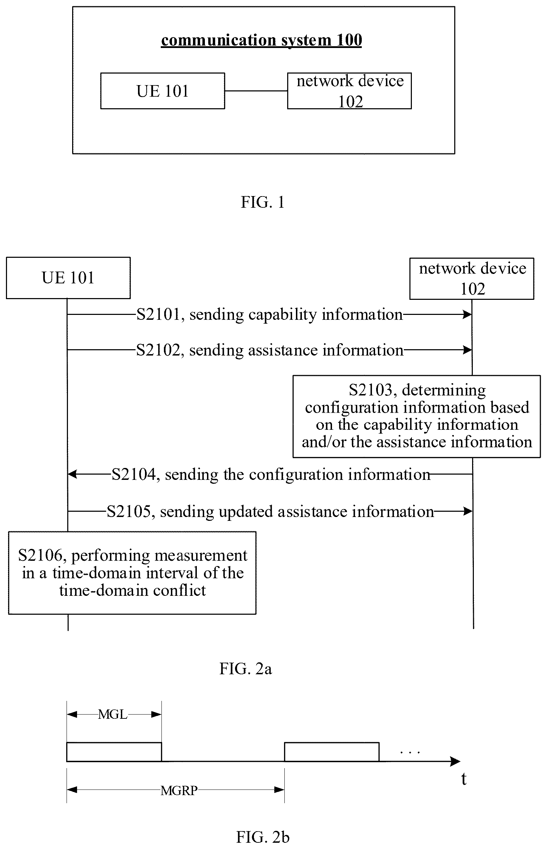

FIG. 1 is a schematic diagram illustrating an architecture of a communication system according to an embodiment of the disclosure.

As shown in FIG. 1, the communication system 100 may include a UE 101 and a network device 102.

In some embodiments, the UE 101, for example, may include at least one of a mobile phone, a wearable device, an Internet of Things device, a car with a communication function, a smart car, a Pad, a computer with a wireless receiving and sending function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, or a wireless terminal in smart home, but is not limited herein.

In some embodiments, the network device 102 may include at least one of an access network device or a core network device.

In some embodiments, the access network device may be, for example, a node or device that accesses a terminal to a wireless network. The access network device may include at least one of an evolved NodeB (eNB), a next generation eNB (ng-eNB), a next generation NodeB (gNB), a node B (NB), a home node B (HNB), a home evolved nodeB (HeNB), a wireless backhaul device, a radio network controller (RNC), a base station controller (BSC), a base transceiver station (BTS), a base band unit (BBU), a mobile switching center, a base station in a 6G communication system, an open base station (Open RAN), a cloud base station (Cloud RAN), a base station in other communication systems, or an access node in a wireless fidelity (Wi-Fi) system, but is not limited herein.

In some embodiments, the technical solution of the disclosure may be applicable to an Open RAN architecture. In this case, the interfaces between or within the access network devices involved in the embodiments of the disclosure may become internal interfaces of the Open RAN, and the processes and information interactions between these internal interfaces may be implemented through software or programs.

In some embodiments, the access network device may include a central unit (CU) and a distributed unit (DU), in which the CU may also be called a control unit. A protocol layer of the access network device may be divided by adopting the CU-DU structure. Some functions of the protocol layer are centrally controlled by the CU, and some or all of remaining functions of the protocol layer are distributed in the DU which is centrally controlled by the CU, but is not limited herein.

In some embodiments, the core network device may be a device including one or more network elements, or may be a plurality of devices or device groups, each including all or part of one or more network elements. The network element may be virtual or physical. The core network may include, for example, at least one of an evolved packet core (EPC), a 5G core network (5GCN), or a next generation core (NGC).

It may be understood that the communication system described in the embodiments of the disclosure aims to more clearly illustrate the technical solution of the embodiments of the disclosure, and does not constitute a limitation on the technical solution proposed in the embodiments of the disclosure. A person skilled in the art may know that with the evolution of the system architecture and the emergence of new service scenarios, the technical solution proposed in the embodiments of the disclosure are also applicable to similar technical problems.

The following embodiments of the disclosure may be applied to the communication system 100 or part of the entities shown in FIG. 1, but are not limited herein.

The entities shown in FIG. 1 are examples, and the communication system may include all or part of the entities in FIG. 1, or may include other entities other than those shown in FIG. 1. The number and form of the entities are arbitrary. The entities may be physical or virtual. The connection relationships between the entities are examples. The entities may be connected or disconnected, and the connection may be in any manner, which may be a direct connection or an indirect connection, or may be a wired connection or a wireless connection.

The embodiments of the disclosure may be applied to long term evolution (LTE), LTE-advanced (LTE-A), LTE-beyond (LTE-B), SUPER 3G, IMT-Advanced, a 4th generation mobile communication system (4G), a 5th generation mobile communication system (5G), 5G new radio (NR), future radio access (FRA), new radio access technology (RAT), new radio (NR), new radio access (NX), future generation radio access (FX), a global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), a public land mobile network (PLMN) network, a device-to-device (D2D) system, a machine-to-machine (M2M) system, an internet of things (IoT) system, vehicle-to-everything (V2X), systems using other communication methods, and next-generation systems based on them. In addition, the plurality of systems may also be combined (for example, a combination of LTE or LTE-A and 5G, etc.) for application.

In some possible implementations, the network device 102 may configure a plurality of types of measurement gaps (MGs) for the UE 101, such as a measurement gap without a priority configuration as defined in R15 or R16, a measurement gap with a priority configuration as involved in R17, or a MUSIM gap dedicated for MUSIM measurement purposes. A time-domain conflict may exist or occur between the plurality of measurement gaps.

FIG. 2a is a schematic diagram illustrating interaction in a method for transmitting capability information according to an embodiment of the disclosure. As shown in FIG. 2a, the embodiment of the disclosure relates to a method for transmitting capability information. The method is applied a communication system 100 and includes the following steps S2101 to S2106.

At step S2101, a UE 101 sends capability information to a network device 102.

In some embodiments, the capability information indicates whether the UE 101 supports a measurement capability when a time-domain conflict exists between different measurement gaps in MUSIM communication.

In some embodiments, the network device 102 receives the capability information.

In some embodiments, the network device 102 is a network device 102 corresponding to a first network in a MUSIM scenario. The first network may be an NW A. The MUSIM scenario further includes a second network. The second network may be an NW B. For example, the first network is an NR, and the second network NW B may be an NR or a LTE.

Optionally, the UE 101 is in a radio resource control (RRC) connected state in the first network, and is in an RRC idle state or an RRC inactive state in the second network.

In some embodiments, in the MUSIM communication, the UE 101 may be configured with at least one of the following measurement gaps: a first measurement gap, which is a measurement gap with a priority configuration for the first network; a second measurement gap, which is a measurement gap with a priority configuration for the second network; or a third measurement gap, which is a measurement gap without a priority configuration for the first network.

Optionally, for a measurement pattern of any measurement gap, reference may be made to FIG. 2b. The network device 102 may configure time-domain parameters such as a measurement gap length (MGL) and a measurement gap repetition periodicity (MGRP) for each measurement gap.

Optionally, the first measurement gap and the third measurement gap are used for neighboring cell measurement under the first network, and may be denoted as NW A MG. The first measurement gap has a priority configuration, and the third measurement gap has no priority configuration.

For example, during the MGL of the first measurement gap or the MGL of the third measurement gap, the UE 101 interrupts communication with a serving cell under the first network, and does not receive or send data. Instead, the UE 101 tunes a receiver from a frequency point of the serving cell to a frequency point of a target cell to perform measurement of the target cell. The receiver tunes back to the frequency point of the current serving cell at or before the end of the MGL to continue data transmission and reception.

Optionally, the second measurement gap is used for cell measurement under the second network, and may be denoted as MUSIM gap.

For example, during the MGL of the second measurement gap, the UE 101 interrupts communication with the first network and performs measurement of a target cell under the second network.

Optionally, priorities of the first measurement gap and the second measurement gap may be compared. For example, the priority of the first measurement gap NW A MG may be compared with the priority of the MUSIM gap.

Optionally, the UE 101 may be configured with a maximum of 3 periodic second measurement gaps and 1 aperiodic second measurement gap simultaneously.

In some embodiments, the time-domain conflict existing between different measurement gaps may be: a time-domain overlap existing between the measurement gap occasions of different measurement gaps; or a time-domain distance between the measurement gap occasions of different measurement gaps being less than or equal to a threshold. The threshold is, for example, 4 ms. For example, the measurement gap occasion may include the MGL.

In some embodiments, the measurement capability includes at least one of: a first measurement capability; a second measurement capability; or a third measurement capability.

Optionally, the first measurement capability is a capability of the UE 101 to support measurement when a time-domain conflict exists between the first measurement gap and the second measurement gap. The UE 101 supporting the first measurement capability may perform corresponding measurement based on at least one of the first measurement gap or the second measurement gap, when the time-domain conflict exists between the first measurement gap and the second measurement gap with the same or different priorities. For example, the UE 101 performs corresponding measurement simultaneously based on the first measurement gap and the second measurement gap; for another example, the UE 101 performs corresponding measurement based on either the first measurement gap or the second measurement gap. It may be understood that during the measurement process, within the MGL of the respective measurement gap, the network device 102 does not perform data scheduling.

In this case, "simultaneously" may refer to the same time unit or the same time location.

Optionally, the second measurement capability is a capability of the UE 101 to support measurement when a time-domain conflict exists between the second measurement gap and the third measurement gap.

Optionally, the third measurement capability is a capability of the UE 101 to support measurement when a time-domain conflict exists between a plurality of second measurement gaps. The UE 101 supporting the third measurement capability may perform corresponding measurement based on at least one of the plurality of second measurement gaps, when the time-domain conflict exists between the plurality of second measurement gaps with the same or different priorities. For example, the UE 101 performs corresponding measurement simultaneously based on the plurality of second measurement gaps, or performs measurement based on one of the second measurement gaps.

In some embodiments, the capability information may indicate the supported measurement capability directly or implicitly.

In some embodiments, when the capability information includes a first capability, the UE 101 supports at least one of the first measurement capability, the second measurement capability, or the third measurement capability. Alternatively, when the capability information does not include a first capability, the UE 101 does not support at least one of the first measurement capability, the second measurement capability, or the third measurement capability.

Optionally, the first capability may refer to a MUSIM gap enhance capability.

Optionally, whether the capability information includes a field corresponding to the first capability implicitly indicates the measurement capability of the UE 101. For example, when the capability information includes the field corresponding to the first capability, the UE 101 supports at least the third measurement capability, or the UE 101 supports the three measurement capabilities mentioned above. For another example, when the capability information does not include the field corresponding to the first capability, the UE 101 does not support the three measurement capabilities mentioned above.

In some embodiments, the capability information may include a bit or an information field corresponding to the first capability. It may be understood that, in embodiments where the capability information does not include the field corresponding to the first capability, the bit corresponding to the first capability may be padded with 0 bits, or the bit corresponding to the first capability is not included.

For example, 1 bit is used to indicate whether the UE 101 supports the first capability. When a value of the 1 bit is a set value, it indicates that the UE 101 supports the first capability. The set value may be 1.

Optionally, when the value of the 1 bit corresponding to the first capability is 1, it indicates that the UE 101 supports the first capability. When the UE supports the first capability, the UE may support at least one of the three measurement capabilities mentioned above. This may be further indicated in step S2102.

Optionally, when the capability information indicates that the UE 101 does not support the first capability, the UE 101 does not support at least one of the first measurement capability, the second measurement capability, or the third measurement capability.

For example, when the value of the 1 bit corresponding to the first capability is 0, it indicates that the UE 101 at least does not support the third measurement capability, or does not support the three measurement capabilities mentioned above.

In some other possible embodiments, the capability information may include bits or information fields corresponding to the three measurement capabilities, to directly indicate whether the measurement capabilities are supported.

For example, the capability information includes 3 bits. The 3 bits correspond one-to-one with the three measurement capabilities. When a value of any bit is a set value, it indicates that the UE 101 supports the measurement capability corresponding to the bit. The set value may be 1.

For example, a 3-bit value of 001 indicates that the UE 101 supports the third measurement capability. A 3-bit value of 101 indicates that the UE 101 supports the first measurement capability and the third measurement capability. A 3-bit value of 010 indicates that the UE 101 supports the second measurement capability.

At step S2102, the UE 101 sends assistance information to the network device 102.

In some embodiments, the assistance information indicates that the UE 101 supports the third measurement capability.

In some embodiments, when the capability information indicates that the UE 101 supports the first capability, the UE 101 sends the assistance information to the network device 102.

For example, when the value of the 1 bit corresponding to the first capability is 1, it indicates that the UE 101 supports the first capability. In response to the UE 101 supporting the first capability, the UE 101 reports the assistance information.

For example, the assistance information may include indication information indicating whether the third measurement capability is supported. The indication information indicates "true", representing that the UE 101 supports the third measurement capability. When a time-domain conflict exists among the requested MUSIM gaps, the UE 101 may perform corresponding measurement simultaneously based on each MUSIM gap. The priorities of the MUSIM gaps may be the same or different.

In the example, the indication information may occupy 1 bit in the assistance information. When the value of the 1 bit is 1, the indication information indicates "true", representing that the UE 101 supports the third measurement capability.

In some embodiments, the assistance information includes at least one of: a measurement pattern of the second measurement gap; or a priority of the second measurement gap.

Optionally, the UE 101 reports, via the assistance information, time-domain parameters such as the MGRP and MGL of the preferred MUSIM gap, and may also report the priority of the preferred MUSIM gap.

Optionally, the UE 101 reports the assistance information based on its own capability, for example, whether the UE 101 supports the third measurement capability.

For example, the assistance information may include indication information of whether the third measurement capability is supported, a measurement pattern of the MUSIM gap, and a priority of the MUSIM gap. For example, the assistance information includes information for the following four MUSIM gaps:
MUSIM gap1, priority 1, indication information indicating "true";
MUSIM gap2, priority 1, indication information indicating "true";
MUSIM gap3, priority 2, indication information indicating "false"; and
MUSIM gap4, priority 2, indication information indicating "false";

Based on the indication of the indication information, when a time-domain conflict exists between the MUSIM gap1 and the MUSIM gap2 which have the same priority, the UE 101 supports the third measurement capability, i.e., the UE 101 may perform corresponding measurement simultaneously based on the MUSIM gap1 and the MUSIM gap2. When a time-domain conflict exists between the MUSIM gap3 and the MUSIM gap4 which have the same priority, since the UE 101 does not support the third measurement capability, the UE 101 cannot perform measurement simultaneously based on the MUSIM gap3 and the MUSIM gap4.

At step S2103, the network device 102 determines configuration information based on the capability information and/or the assistance information.

In some embodiments, the configuration information includes the second measurement gap.

In some embodiments, in a case that the UE 101 only reports the capability information, the network device 102 may perform corresponding configuration based on whether the UE 101 supports the first capability.

In some embodiments, in a case that the UE 101 reports both the capability information and the assistance information, the network device 102 may perform corresponding configuration based on the assistance information, or perform corresponding configuration based on both the capability information and the assistance information. In an embodiment, the UE 101 reports the assistance information only when the UE 101 supports the first capability.

In some embodiments, when performing the MUSIM gap configuration, the network device 102 expects, based on the capability information and/or the assistance information reported by the UE 101, that a time-domain conflict existing between different measurement gaps does not affect a measurement behavior of the UE 101. For example, the network device 102, during configuration, expects that potential time-domain conflicts existing between an NW A gap and a MUSIM gap, and/or potential time-domain conflicts existing between the plurality of MUSIM gaps, do not affect normal measurement behavior of the UE 101.

In some embodiments, when the UE 101 does not support the first measurement capability, that is, the UE 101 does not support performing measurement simultaneously under the first measurement gap and the second measurement gap having the same or different priorities, the network device 102 needs to configure a priority of the second measurement gap to be different from a priority of the first measurement gap in the configuration information. In this case, the UE 101 may perform measurement based on the measurement gap with the higher priority in the time-domain interval and discard the measurement gap with the lower priority. For details, reference may be made to the description in the following embodiments.

In some embodiments, when the UE 101 does not support the third measurement capability, that is, the UE 101 does not support performing measurement simultaneously under the plurality of second measurement gaps having the same or different priorities, if the network device 102 configures the plurality of second measurement gaps in the configuration information, the priorities of the plurality of second measurement gaps are different. In this case, the UE 101 may perform measurement based on the second measurement gap with the higher priority in the time-domain interval and discard the second measurement gap with the lower priority. For details, reference may be made to the description in the following embodiments.

At step S2104, the network device 102 sends the configuration information to the UE 101.

In some embodiments, the UE 101 receives the configuration information sent by the network device 102.

At step S2105, the UE 101 sends updated assistance information to the network device 102.

In some embodiments, when configuration information of the measurement gap changes, the UE 101 re-evaluates its own capability, such as whether the UE 101 support the three capabilities mentioned above, and re-reports the assistance information to trigger MUSIM gap reconfiguration.

In some embodiments, the configuration information of the measurement gap may change, for example, when the UE 101 receives an NW A RRC reconfiguration message sent by the network device 102, or when the UE 101 detects a change in the measurement gap such as the NW A MG.

In some embodiments, the network device 102 receives the updated assistance information and reconfigures the second measurement gap based on the updated assistance information.

In some embodiments, the network device 102 sends reconfigured MUSIM gap information to the UE 101.

At step S2106, the UE 101 performs measurement in a time-domain interval of the time-domain conflict.

In some embodiments, based on the capability of the UE 101, during the measurement process, the UE 101 does not discard measurement for the measurement gap where conflicts occurs when its capability allows, and satisfies corresponding measurement requirements.

In some embodiments, based on different measurement capabilities supported by the UE 101, step S2106 may adopt one of the following steps S2106-1 to S2106-6.

At step S2106-1, in the time-domain interval of the time-domain conflict, the UE 101 performs cell measurement of the first network based on the first measurement gap, and/or performs cell measurement of the second network based on the second measurement gap.

Optionally, when the UE 101 supports the first measurement capability, if the time-domain conflict exists between the first measurement gap and the second measurement gap, and the priorities of the first measurement gap and the second measurement gap are the same or different, the UE 101 may perform corresponding measurement based on at least one of the first measurement gap and the second measurement gap in the time-domain interval, or perform measurements under both measurement gaps respectively. For example, the UE 101 performs neighboring cell measurement under the NW A based on the first measurement gap, and simultaneously performs cell measurement under the NW B based on the second measurement gap.

It needs be noted that when the UE 101 supports the first measurement capability, the UE may not discard the first measurement gap or the second measurement gap.

At step S2106-2, in the time-domain interval of the time-domain conflict, the UE 101 performs cell measurement of the first network based on the second measurement gap, and/or performs cell measurement of the second network based on the third measurement gap.

Optionally, when the UE 101 supports the second measurement capability, if the time-domain conflict exists between the second measurement gap and the third measurement gap, the UE 101 may perform measurements under both measurement gaps respectively in the time-domain interval. For example, the UE 101 performs cell measurement under the NW B based on the second measurement gap, and simultaneously performs cell measurement under the NW A based on the third measurement gap.

At step S2106-3, in the time-domain interval of the time-domain conflict, the

UE 101 performs cell measurement of the second network based on at least one of the plurality of second measurement gaps.

Optionally, different second measurement gaps may correspond to different measurement objects. The different measurement objects may be indicated by the configuration information. For example, different measurement objects correspond to different measurement purposes or different cells.

Optionally, when the UE 101 supports the third measurement capability, if the time-domain conflict exists between the plurality of second measurement gaps, and the priorities of the plurality of MUSIM gaps are the same or different, the UE 101 may perform measurement under at least one second measurement gap in the time-domain interval, or perform measurements under the plurality of measurement gaps respectively. For example, the UE 101 performs cell measurement under the NW B based on one second measurement gap, and simultaneously performs cell measurement under the NW B based on another second measurement gap.

Optionally, the plurality may be two or more than two.

At step S2106-4, in the time-domain interval of the time-domain conflict, the UE 101 performs measurement based on one with a higher priority from the second measurement gap and the first measurement gap.

Optionally, when the UE 101 does not support the first measurement capability, the network device 102 needs to configure a priority of the second measurement gap to be different from a priority of the first measurement gap in the configuration information. In this case, when the UE 101 does not support the first measurement capability, the UE 101 may perform measurement corresponding to the measurement gap with the higher priority based on the priorities.

At step S2106-5, in the time-domain interval of the time-domain conflict, the UE 101 performs measurement based on one with a higher priority among the plurality of second measurement gaps.

Optionally, when the UE 101 does not support the third measurement capability, the network device 102 needs to configure different priorities for the plurality of second measurement gaps in the configuration information. In this case, when the UE 101 does not support the third measurement capability, the UE 101 may perform measurement corresponding to the second measurement gap with the higher priority based on the priorities.

At step S2106-6, in the time-domain interval of the time-domain conflict, the UE 101 performs measurement based on the second measurement gap or the third measurement gap selected by the UE.

Optionally, when the UE 101 does not support the second measurement capability, the UE 101 may perform corresponding measurement based on the measurement gap autonomously selected by the UE.

In some embodiments, steps S2102 to S2106 are optional.

In some embodiments, the method includes step S2101.

In some embodiments, the method includes steps S2101 and S2102.

In some embodiments, the method includes steps S2101, S2103, S2104 and S2106.

In some embodiments, the method includes steps S2101, S2102, S2103, S2104 and S2106.

In some embodiments, the method includes steps S2101 to S2106.

In some embodiments, based on whether the UE 101 supports the three measurement capabilities mentioned above, step S2106 may adopt one of steps S2106-1 to S2106-6.

In the embodiments of the disclosure, the UE 101 sends the capability information to the network device 102, to report the measurement capability when the time-domain conflict exists between different measurement gaps in the MUSIM communication. After learning the capability reported by the UE 101, the network device 102 performs reasonable configuration adapted to the capability of the UE 101, thus enabling the UE 101 to achieve measurement more efficiently within the limits of the capability of the UE.

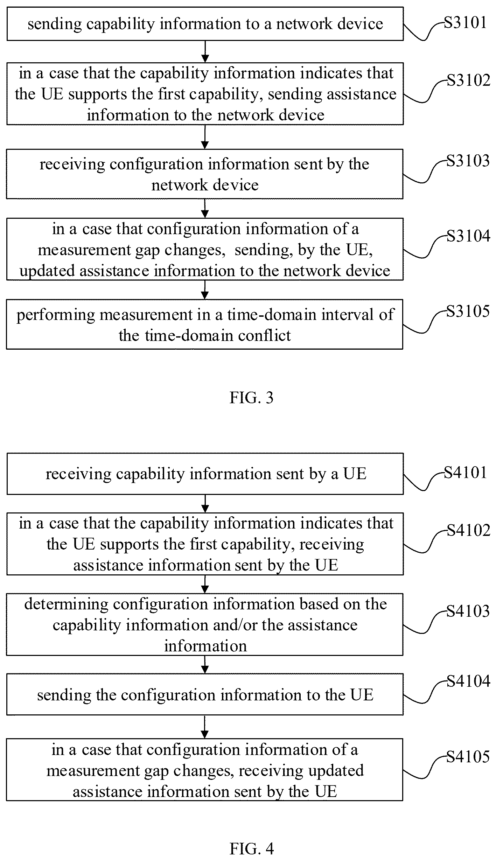

FIG. 3 is a flowchart illustrating a method for transmitting capability information according to an embodiment of the disclosure. As shown in FIG. 3, the embodiment of the disclosure relates to a method for transmitting capability information. The method is performed by a UE 101 and includes the following steps S3101 to S3105.

At step S3101, the UE 101 sends capability information to a network device 102.

In some embodiments, for the implementation of step S3101, reference may be made to the related implementation of step S2101, which is not repeated herein.

In some embodiments, the capability information indicates whether the UE supports a measurement capability when a time-domain conflict exists between different measurement gaps in MUSIM communication.

In some embodiments, the measurement capability includes at least one of: a first measurement capability; a second measurement capability; or a third measurement capability.

The first measurement capability is a capability of the UE to support measurement when a time-domain conflict exists between a first measurement gap and a second measurement gap; the second measurement capability is a capability of the UE to support measurement when a time-domain conflict exists between the second measurement gap and a third measurement gap; and the third measurement capability is a capability of the UE to support measurement when a time-domain conflict exists between a plurality of second measurement gaps.

The first measurement gap is a measurement gap with a priority configuration for a first network; the second measurement gap is a measurement gap with a priority configuration for a second network; and the third measurement gap is a measurement gap without a priority configuration for the first network.

In some embodiments, the UE supports at least one of the first measurement capability, the second measurement capability, or the third measurement capability, and the capability information includes a first capability;
or, the UE does not support at least one of the first measurement capability, the second measurement capability, or the third measurement capability; and the capability information does not include a first capability.

For the implementation of implicitly indicating the measurement capability of the UE 101, reference may be made to the description in the related implementation of step S2101, which is not repeated herein.

In some embodiments, the UE does not support at least one of the first measurement capability, the second measurement capability, or the third measurement capability; and the capability information indicates that the UE does not support a first capability.

For the implementation, reference may be made to the description in the related implementation of step S2101, which is not repeated herein.

At step S3102, in a case that the capability information indicates that the UE supports the first capability, the UE 101 sends assistance information to the network device 102.

In some embodiments, for the implementation of step S3102, reference may be made to the related implementation of step S2102, which is not repeated herein.

In some embodiments, the assistance information indicates that the UE 101 supports the third measurement capability.

In some embodiments, the assistance information includes at least one of: a measurement pattern of the second measurement gap; or a priority of the second measurement gap.

At step S3103, the UE 101 receives configuration information sent by the network device 102.

In some embodiments, for the implementation of step S3103, reference may be made to the related implementation of steps S2103 to S2104, which is not repeated herein.

In some embodiments, the configuration information includes the second measurement gap, and the configuration information is determined based on the capability information and/or the assistance information.

In some embodiments, when the UE 101 does not support the first measurement capability, a priority of the second measurement gap is different from a priority of the first measurement gap in the configuration information.

In some embodiments, when the UE 101 does not support the third measurement capability, priorities of the plurality of second measurement gaps are different in the configuration information.

At step S3104, in a case that configuration information of a measurement gap changes, the UE 101 sends updated assistance information to the network device 102.

In some embodiments, for the implementation of step S3104, reference may be made to the related implementation of step S2105, which is not repeated herein.

At step S3105, the UE 101 performs measurement in a time-domain interval of the time-domain conflict.

In some embodiments, for the implementation of step S3105, reference may be made to the related implementation of step S2106, which is not repeated herein.

In some embodiments, step S3105 may adopt step S3105-1.

At step S3105-1, in a case that the UE 101 supports the first measurement capability, the UE 101 performs cell measurement of the first network based on the first measurement gap, and/or performs cell measurement of the second network based on the second measurement gap, in the time-domain interval of the time-domain conflict.

Optionally, for the implementation of step S3105-1, reference may be made to the related implementation of step S2106-1, which is not repeated herein.

In some embodiments, step S3105 may adopt step S3105-2.

At step S3105-2, in a case that the UE 101 supports the second measurement capability, the UE 101 performs cell measurement of the first network based on the second measurement gap, and/or performs cell measurement of the second network based on the third measurement gap, in the time-domain interval of the time-domain conflict,.

Optionally, for the implementation of step S3105-2, reference may be made to the related implementation of step S2106-2, which is not repeated herein.

In some embodiments, step S3105 may adopt step S3105-3.

At step S3105-3, in a case that the UE 101 supports the third measurement capability, the UE 101 performs cell measurement of the second network based on at least one of the plurality of second measurement gaps, in the time-domain interval of the time-domain conflict.

Optionally, for the implementation of step S3105-3, reference may be made to the related implementation of step S2106-3, which is not repeated herein.

In some embodiments, step S3105 may adopt step S3105-4.

At step S3105-4, in a case that the UE 101 does not support the first measurement capability, and a priority of the second measurement gap is different from a priority of the first measurement gap in the configuration information, the UE 101 performs measurement based on one with a higher priority from the second measurement gap and the first measurement gap.

Optionally, for the implementation of step S3105-4, reference may be made to the related implementation of step S2106-4, which is not repeated herein.

In some embodiments, step S3105 may adopt step S3105-5.

At step S3105-5, in a case that the UE 101 does not support the third measurement capability, and priorities of the plurality of second measurement gaps are different in the configuration information, the UE 101 performs measurement based on one with a higher priority among the plurality of second measurement gaps.

Optionally, for the implementation of step S3105-5, reference may be made to the related implementation of step S2106-5, which is not repeated herein.

In some embodiments, step S3105 may adopt step S3105-6.

At step S3105-6, in a case that the UE 101 does not support the second measurement capability, the UE 101 performs measurement based on the second measurement gap or the third measurement gap selected by the UE.

Optionally, for the implementation of step S3105-6, reference may be made to the related implementation of step S2106-6, which is not repeated herein.

In some embodiments, the method may include step S3101.

In some embodiments, the method may include steps S3101 to S3102.

In some embodiments, the method may include steps S3101 and S3103, or include steps S3101 to S3103.

In some embodiments, the method may include steps S3101, S3102 and S3104, or include steps S3101 to S3104.

In some embodiments, based on the measurement capability of the UE 101, step S3105 may adopt one of steps S3105-1 to S3105-6.

In the embodiments of the disclosure, the UE 101 sends the capability information to the network device 102, to report the measurement capability when the time-domain conflict exists between different measurement gaps in the MUSIM communication. This enables the network device 102 to perform reasonable configuration adapted to the capability of the UE 101 after learning the capability of the UE 101.

FIG. 4 is a flowchart illustrating a method for transmitting capability information according to an embodiment of the disclosure. As shown in FIG. 4, the embodiment of the disclosure relates to a method for transmitting capability information. The method is performed by a network device 102 in a first network and includes the following steps S4101 to S4105.

At step S4101, the network device 102 receives capability information sent by a UE 101.

In some embodiments, for the implementation of step S4101, reference may be made to the related implementation of step S2101 and step S3101, which is not repeated herein.

In some embodiments, the capability information indicates whether the UE supports a measurement capability when a time-domain conflict exists between different measurement gaps in MUSIM communication.

In some embodiments, the measurement capability includes at least one of: a first measurement capability; a second measurement capability; or a third measurement capability.

The first measurement capability is a capability of the UE to support measurement when a time-domain conflict exists between a first measurement gap and a second measurement gap; the second measurement capability is a capability of the UE to support measurement when a time-domain conflict exists between the second measurement gap and a third measurement gap; and the third measurement capability is a capability of the UE to support measurement when a time-domain conflict exists between a plurality of second measurement gaps.

The first measurement gap is a measurement gap with a priority configuration for a first network; the second measurement gap is a measurement gap with a priority configuration for a second network; and the third measurement gap is a measurement gap without a priority configuration for the first network.

In some embodiments, the UE supports at least one of the first measurement capability, the second measurement capability, or the third measurement capability, and the capability information includes a first capability;
or, the UE does not support at least one of the first measurement capability, the second measurement capability, or the third measurement capability, and the capability information does not include a first capability.

In some embodiments, the UE does not support at least one of the first measurement capability, the second measurement capability, or the third measurement capability; and the capability information indicates that the UE does not support a first capability.

At step S4102, in a case that the capability information indicates that the UE supports the first capability, the network device 102 receives assistance information sent by the UE 101.

In some embodiments, for the implementation of step S4102, reference may be made to the related implementation of step S2102 and step S3102, which is not repeated herein.

In some embodiments, the assistance information indicates that the UE supports the third measurement capability.

In some embodiments, the assistance information includes at least one of: a measurement pattern of the second measurement gap; or a priority of the second measurement gap.

At step S4103, the network device 102 determines configuration information based on the capability information and/or the assistance information.

In some embodiments, for the implementation of step S4103, reference may be made to the related implementation of step S2103, which is not repeated herein.

In some embodiments, the configuration information includes the second measurement gap.

In some embodiments, when the UE does not support the first measurement capability, a priority of the second measurement gap is different from a priority of the first measurement gap in the configuration information.

In some embodiments, when the UE does not support the third measurement capability, priorities of the plurality of second measurement gaps are different in the configuration information.

At step S4104, the network device 102 sends the configuration information to the UE 101.

In some embodiments, for the implementation of step S4104, reference may be made to the related implementation of step S2104 and step S3103, which is not repeated herein.

At step S4105, in a case that configuration information of a measurement gap changes, the network device 102 receives updated assistance information sent by the UE 101.

In some embodiments, for the implementation of step S4105, reference may be made to the related implementation of step S2105 and step 3104, which is not repeated herein.

In some embodiments, the UE 101 may perform measurements based on the configuration information. For the measurement behavior, reference may be made to the related implementation of step S2106 and step 3105, which is not repeated herein.

In some embodiments, the method may include step S4101.

In some embodiments, the method may include steps S4101, S4103 and S4104.

In some embodiments, the method may include steps S4101 to S4102, or include steps S3101 to S3104.

In some embodiments, the method may include steps S4101, S4102 and S4105, or include steps S4101 to S4105.

In the embodiments of the disclosure, the network device 102 receives the capability information sent by the UE 101, and obtain the measurement capability of the UE 101 when the time-domain conflict exists between different measurement gaps in the MUSIM communication. This enables the network device 102 to perform reasonable configuration adapted to the capability of the UE 101.

To facilitate understanding of the embodiments of the disclosure, some specific examples are describe below.

### Example 1:

A UE supporting a UE capability (such as MUSIM gap enhancement capability), when making a MUSIM gap request, considers the potential impact of the requested MUSIM gap in the measurement. For example, the UE considers whether the UE may process at least one of the following:
(1) measurement when a conflict exists between an NW A MG and a MUSIM gap with the same priority configuration;
(2) measurement when a conflict exists between an NW A MG and a MUSIM gap without a priority configuration;
(3) measurement when a conflict exists between a plurality of MUSIM gaps with the same priorities.

In some embodiments, the MUSIM gap enhancement capability corresponds to the first capability in the above embodiments.

In some embodiments, the MUSIM gap corresponds to the second measurement gap in the above embodiments.

In some embodiments, scenario (1) corresponds to the first measurement capability in the above embodiments.

In some embodiments, scenario (2) corresponds to the second measurement capability in the above embodiments.

In some embodiments, scenario (3) corresponds to the third measurement capability in the above embodiments.

### Example 2:

The UE reports the MUSIM gap enhancement capability.

In this example, the UE reporting the MUSIM gap enhancement capability indicates that the UE has the processing capability for (1) to (3) above.

In this example, the UE supporting the MUSIM gap enhancement capability, when reporting assistance information, uses additional indication information to indicate whether the UE has the processing capability for (1) to (3) above.

### Example 3:

Based on example 2, the UE reports the assistance information for MUSIM gap configuration, including a MUSIM gap pattern and a corresponding priority.

### Example 4:

Based on example 2 and example 3, the network issues the MUSIM gap configuration and expects that a potential conflict between an NW A gap and a MUSIM gap and/or a potential conflict between MUSIM gaps does not affect normal measurement behavior of the UE.

In some embodiments, the MUSIM gap configuration corresponds to the configuration information in the above embodiments.

### Example 5:

Based on the examples above, the UE does not discard measurement under the gap where the conflict occurs and satisfies corresponding measurement requirements.

### Example 6:

When the UE receives an NW A RRC reconfiguration message, or detects a change in the NW A MG configuration, the UE needs to re-evaluate the conflict issue between the MUSIM gap and the NW A MG, re-report the assistance information, and trigger reconfiguration of the MUSIM gap.

### Example 7:

The UE does not support the MUSIM gap enhancement capability.

In a case that the UE does not support processing measurement when a conflict exists between the NW A MG and the MUSIM gap with the same priority configuration, the network cannot configure the NW A MG and the MUSIM gap with the same priority, and the UE performs measurement under the gap with the highest priority according to the priority rule.

In a case that the UE does not support processing measurement when a conflict exists between the NW A MG and the MUSIM gap without a priority configuration, how to perform measurement under the corresponding gap depends on UE implementation.

In a case that the UE does not support processing measurement when a conflict exists between the plurality of MUSIM gaps with the same priority, the network cannot configure MUSIM gaps with the same priority, and the UE performs measurement under the gap with the highest priority based on the priority rule.

In the embodiments of the disclosure, some or all steps and their optional implementations may be arbitrarily combined with some or all steps in other embodiments, and may also be arbitrarily combined with optional implementations of other embodiments.

The embodiments of the disclosure also provide an apparatus for implementing any one of the above methods. For example, an apparatus is provided, including units or modules for performing the steps executed by the terminal in any one of the above methods. Furthermore, another apparatus is provided, including units or modules for performing the steps executed by the network device (e.g., an access network device, a core network functional node, a core network device, etc.) in any one of the above methods.

It should be understood that a division of units or modules in the above apparatus is only a division of logical functions. In actual implementations, they may be fully or partially integrated into one physical entity, or may be physically separated. In addition, the units or the modules in the apparatus may be implemented in a form of software called by the processor. For example, the apparatus includes a processor, in which the processor is connected to a memory storing instructions. The processor calls the instructions stored in the memory to implement any one of the above methods or to implement functions of the units or the modules of the above apparatus. The processor is, for example, a general-purpose processor, such as a central processing unit (CPU) or a microprocessor, and the memory is a memory inside the apparatus or a memory outside the apparatus. Or, the units or the modules in the apparatus may be implemented in a form of a hardware circuit. The functions of some or all units or modules may be implemented by designing the hardware circuit. The hardware circuit may be understood as one or more processors. For example, in an implementation, the hardware circuit is an application specific integrated circuit (ASIC). The functions of some or all units or modules are implemented by designing logical relationships of components within the circuit. In another implementation, the hardware circuit may be implemented by a programmable logic device (PLD). Taking a field-programmable gate array (FPGA) as an example, it may include a large number of logic gate circuits. The connection relationships between the logic gate circuits are configured via profiles to implement the functions of some or all units or modules. All units or modules of the above apparatus may be fully implemented in a form of software called by the processor, or fully implemented in a form of the hardware circuit, or partially implemented in a form of software called by the processor and partially implemented in a form of the hardware circuit.

In the embodiments of the disclosure, the processor is a circuit with a signal processing capability. In an implementation, the processor may be a circuit with a capability to read and run instructions, such as a CPU, a microprocessor, a graphics processing unit (GPU) (which may be understood as a type of the microprocessor), a digital signal processor (DSP), etc. In another implementation, the processor may implement functions via a logical relationship of hardware circuits. The logical relationship of the hardware circuit is fixed or reconstructed, for example, a hardware circuit implemented by the ASIC or the PLD, such as the FPGA. In the reconstructed hardware circuit, a process that the processor loads the profiles to implement a hardware circuit configuration may be understood as a process that the processor loads the instructions to implement the functions of some or all units. Furthermore, it may also be a hardware circuit designed for artificial intelligence, which may be understood as a type of ASIC, such as a neural network processing unit (NPU), a tensor processing unit (TPU), a deep learning processing unit (DPU), etc.

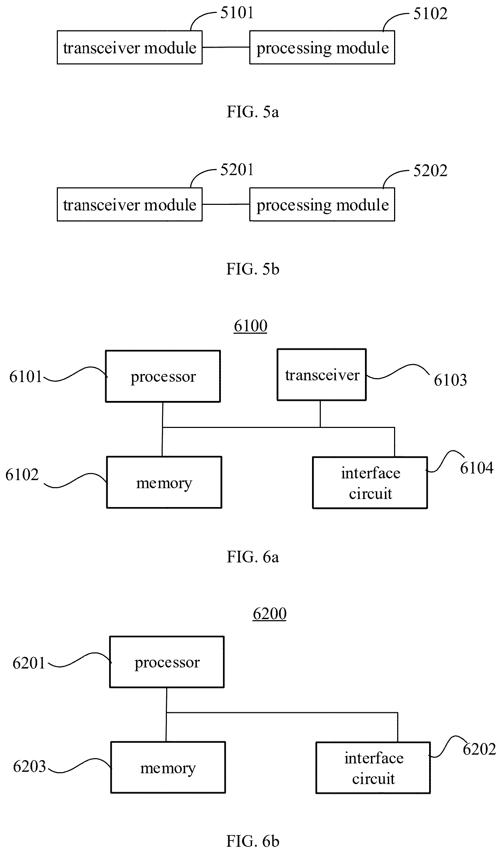

FIG. 5a is a block diagram illustrating a communication processing apparatus according to an embodiment of the disclosure. The communication processing apparatus may implement the functions of the UE 101. As shown in FIG. 5a, the apparatus includes: a transceiver module 5101, configured to send capability information to a network device, in which the capability information indicates whether the UE supports a measurement capability when a time-domain conflict exists between different measurement gaps in MUSIM communication.

Optionally, the transceiver module 5101 is configured to perform the steps related to message transmission and reception performed by the UE 101 in any of the above methods, which are not repeated herein.

Optionally, the apparatus further includes a processing module 5102, configured to perform steps related to message processing performed by the UE 101 in any of the above methods, which are not repeated herein.

FIG. 5b is a block diagram illustrating a communication processing apparatus according to an embodiment of the disclosure. The communication processing apparatus may implement the functions of the network device 102. As shown in FIG. 5b, the apparatus includes: a transceiver module 5201, configured to receive capability information sent by a UE, in which the capability information indicates whether the UE supports a measurement capability when a time-domain conflict exists between different measurement gaps in MUSIM communication.

Optionally, the transceiver module 5201 is configured to perform the steps related to transmission and reception performed by the network device 102 in any of the above methods, which are not repeated herein.

Optionally, the apparatus further includes a processing module 5202, configured to perform the steps related to processing performed by the network device 102 in any of the above methods, such as steps related to message generation and computational processing, which are not repeated herein.

FIG. 6a is a block diagram of a communication device 6100 according to an embodiment of the disclosure. The communication device 6100 may be a network device (such as an access network device, a core network device, etc.), or a terminal (such as a UE, etc.), or a chip, a chip system, a processor, etc. that supports the network device to implement any one of the methods, or a chip, a chip system, a processor, etc. that supports the terminal to implement any one of the methods. The communication device 6100 may be configured to implement the method in the above method embodiments. For details, please refer to the description in the above method embodiments.

As shown in FIG. 6a, the communication device 6100 may include one or more processors 6101. The processor 6101 may be a general purpose processor or a special purpose processor, for example, a baseband processor or a central processing unit. The baseband processor may be used to process communication protocols and communication data, and the central processing unit may be used to control communication apparatuses (such as a base station, a baseband chip, a terminal, a terminal chip, a DU or a CU, etc.), execute computer programs, and process computer program data. The processor 6101 is configured to invoke instructions, so that the communication device 6100 implements any one of the above methods.

Optionally, the communication device 6100 further includes one or more memories 6102 for storing instructions. Optionally, all or some of the memories 6102 may also be located outside the communication device 6100.

In some embodiments, the communication device 6100 further includes one or more transceivers 6103. When the communication device 6100 includes one or more transceivers 6103, communication steps such as sending and receiving in the above methods are performed by the transceiver 6103, and other steps are performed by the processor 6101.

In some embodiments, the transceiver may include a receiver and a transmitter, which may be separate or integrated together. Optionally, terms such as transceiver, transceiver unit, transceiving circuit, etc. may be used interchangeably; terms such as transmitter, transmission unit, transmitting circuit, etc. may be used interchangeably; and terms such as receiver, reception unit, receiving circuit, etc. may be used interchangeably.

Optionally, the communication device 6100 further includes one or more interface circuits 6104. The interface circuit 6104 is connected to the memory 6102. The interface circuit 6104 may be configured to receive signals from the memory 6102 or other devices, and may be configured to send signals to the memory 6102 or other devices. For example, the interface circuit 6104 may read instructions stored in the memory 6102 and send the instructions to the processor 6101.

The communication device 6100 in the above embodiments may be a network device or a terminal, but a scope of the communication device 6100 in the disclosure is not limited to this, and a structure of the communication device 6100 may not be limited by FIG. 6a. The communication device may be an independent device or a part of a larger device. For example, the communication device may be: 1) an independent IC, or a chip, or a chip system or a subsystem; 2) a collection including one or more IC, optionally, the IC collection may also include storage components for storing data and computer programs; 3) an ASIC, such as a modem; 4) modules embedded in other devices; 5) a receiver, a terminal, an intelligent terminal, a cellular phone, a wireless device, a handheld phone, a mobile unit, a vehicle-mounted device, a network device, a cloud device, an artificial intelligence device, etc.; 6) others.

FIG. 6b is a block diagram of a chip 6200 according to an embodiment of the disclosure. For a case where the communication device 6100 may be a chip or a chip system, reference may be made to the block diagram of the chip 6200 shown in FIG. 6b, but not limited to this. The chip 6200 includes one or more processors 6201. The processor 6201 is configured to invoke the instructions to cause the chip 6200 to execute any one of the above methods.

In some embodiments, the chip 6200 further includes one or more interface circuits 6202. The interface circuit 6202 is connected to a memory 6203. The interface circuit 6202 may be configured to receive signals from the memory 6203 or other devices, and may be configured to send signals to the memory 6203 or other devices. For example, the interface circuit 6202 may read the instructions stored in the memory 6203 and send the instructions to the processor 6201. Optionally, terms such as interface circuit, interface, transceiver pin, transceiver, etc. may be used interchangeably.

In some embodiments, the chip 6200 further includes one or more memories 6203 for storing instructions. Optionally, all or some of the memories 6203 may be located outside the chip 6200.

The disclosure also provides a storage medium for storing instructions. When the instructions are running on the communication device 6100, the communication device 6100 is caused to implement any one of the above methods. Optionally, the above storage medium is an electronic storage medium. Optionally, the above storage medium is a computer-readable storage medium, which is not limited to this, and the above storage medium may also be a storage medium readable by other devices. Optionally, the above storage medium may be a non-transitory storage medium, which is not limited to this, and the above storage medium may also be a transitory storage medium.

The disclosure also provides a program product. When the program product is executed by the communication device 6100, the communication device 6100 is caused to implement any one of the above methods. Optionally, the above program product is a computer program product.

The disclosure also provides a computer program. When the computer program is running on a computer, the computer is caused to implement any one of the above methods.

The disclosure also provides a communication system. The communication system includes a UE and a network device, in which
the UE is configured to send capability information to the network device, in which the capability information indicates whether the UE supports a measurement capability when a time-domain conflict exists between different measurement gaps in MUSIM communication; and
the network device is configured to receive the capability information sent by the UE.

### Industrial utility

In the embodiments of the disclosure, the UE sends the capability information to the network device, to report the measurement capability when the time-domain conflict exists between different measurement gaps in the MUSIM communication. This enables the network device to perform reasonable configuration adapted to the capability of the UE after learning the capability of the UE.

## Claims

1. A method for sending capability information, performed by a user equipment (UE), comprising:
sending capability information to a network device, wherein the capability information indicates whether the UE supports a measurement capability when a time-domain conflict exists between different measurement gaps in multi-universal subscriber identity module (MUSIM) communication.

2. The method according to claim 1, wherein the measurement capability comprises at least one of:
a first measurement capability;
a second measurement capability; or
a third measurement capability;
wherein the first measurement capability is a capability of the UE to support measurement when a time-domain conflict exists between a first measurement gap and a second measurement gap; the second measurement capability is a capability of the UE to support measurement when a time-domain conflict exists between the second measurement gap and a third measurement gap; and the third measurement capability is a capability of the UE to support measurement when a time-domain conflict exists between a plurality of second measurement gaps;
the first measurement gap is a measurement gap with a priority configuration for a first network; the second measurement gap is a measurement gap with a priority configuration for a second network; and the third measurement gap is a measurement gap without a priority configuration for the first network.

3. The method according to claim 2, wherein
the UE supports at least one of the first measurement capability, the second measurement capability, or the third measurement capability; and the capability information comprises a first capability; or,
the UE does not support at least one of the first measurement capability, the second measurement capability, or the third measurement capability; and the capability information does not comprise a first capability.

4. The method according to claim 2, wherein
the UE does not support at least one of the first measurement capability, the second measurement capability, or the third measurement capability; and the capability information indicates that the UE does not support a first capability.

5. The method according to claim 2, further comprising:
sending assistance information to the network device, wherein the assistance information indicates that the UE supports the third measurement capability,
wherein the capability information indicates that the UE supports a first capability.

6. The method according to claim 5, wherein the assistance information comprises at least one of:
a measurement pattern of the second measurement gap; or
a priority of the second measurement gap.

7. The method according to claim 5, further comprising:
sending updated assistance information to the network device,
wherein configuration information of the measurement gap changes.

8. The method according to any one of claims 2 to 7, further comprising:
receiving configuration information sent by the network device, wherein the configuration information comprises the second measurement gap, and the configuration information is determined based on the capability information and/or the assistance information.

9. The method according to claim 8, further comprising:
in a time-domain interval of the time-domain conflict, performing cell measurement of the first network based on the first measurement gap, and/or performing cell measurement of the second network based on the second measurement gap,
wherein the UE supports the first measurement capability.

10. The method according to claim 8, further comprising:
in a time-domain interval of the time-domain conflict, performing cell measurement of the first network based on the second measurement gap, and/or performing cell measurement of the second network based on the third measurement gap,
wherein the UE supports the second measurement capability.

11. The method according to claim 8, further comprising:
in a time-domain interval of the time-domain conflict, performing cell measurement of the second network based on at least one of the plurality of second measurement gaps,
wherein the UE supports the third measurement capability.

12. The method according to claim 8, wherein
a priority of the second measurement gap is different from a priority of the first measurement gap in the configuration information; and
the UE does not support the first measurement capability.

13. The method according to claim 12, further comprising:
performing measurement based on one with a higher priority from the second measurement gap and the first measurement gap.

14. The method according to claim 8, wherein
priorities of the plurality of second measurement gaps are different in the configuration information; and
the UE does not support the third measurement capability.

15. The method according to claim 14, further comprising:
performing measurement based on one with a higher priority among the plurality of second measurement gaps.

16. The method according to claim 8, further comprising:
performing measurement based on the second measurement gap or the third measurement gap selected by the UE,
wherein the UE does not support the second measurement capability.

17. A method for receiving capability information, performed by a network device in a first network, comprising:
receiving capability information sent by a user equipment (UE), wherein the capability information indicates whether the UE supports a measurement capability when a time-domain conflict exists between different measurement gaps in multi-universal subscriber identity module (MUSIM) communication.

18. The method according to claim 17, wherein the measurement capability comprises at least one of:
a first measurement capability;
a second measurement capability; or
a third measurement capability;
wherein the first measurement capability is a capability of the UE to support measurement when a time-domain conflict exists between a first measurement gap and a second measurement gap; the second measurement capability is a capability of the UE to support measurement when a time-domain conflict exists between the second measurement gap and a third measurement gap; and the third measurement capability is a capability of the UE to support measurement when a time-domain conflict exists between a plurality of second measurement gaps;
the first measurement gap is a measurement gap with a priority configuration for a first network; the second measurement gap is a measurement gap with a priority configuration for a second network; and the third measurement gap is a measurement gap without a priority configuration for the first network.

19. The method according to claim 18, wherein
the UE supports at least one of the first measurement capability, the second measurement capability, or the third measurement capability; and the capability information comprises a first capability; or,
the UE does not support at least one of the first measurement capability, the second measurement capability, or the third measurement capability; and the capability information does not comprise a first capability.

20. The method according to claim 18, wherein
the UE does not support at least one of the first measurement capability, the second measurement capability, or the third measurement capability; and the capability information indicates that the UE does not support a first capability.

21. The method according to claim 18, further comprising:
receiving assistance information sent by the UE, wherein the assistance information indicates that the UE supports the third measurement capability,
wherein the capability information indicates that the UE supports a first capability.

22. The method according to claim 21, wherein the assistance information comprises at least one of:
a measurement pattern of the second measurement gap; or
a priority of the second measurement gap.

23. The method according to claim 21, further comprising:
receiving updated assistance information sent by the UE, wherein configuration information of the measurement gap changes.

24. The method according to any one of claims 18 to 23, further comprising:
determining configuration information based on the capability information and/or the assistance information, wherein the configuration information comprises the second measurement gap; and
sending the configuration information to the UE.

25. The method according to claim 24, wherein
a priority of the second measurement gap is different from a priority of the first measurement gap in the configuration information; and
the UE does not support the first measurement capability.

26. The method according to claim 24, wherein
priorities of the plurality of second measurement gaps are different in the configuration information; and
the UE does not support the third measurement capability.

27. A communication apparatus, comprising:
a transceiver module, configured to send capability information to a network device, wherein the capability information indicates whether the UE supports a measurement capability when a time-domain conflict exists between different measurement gaps in multi-universal subscriber identity module (MUSIM) communication.

28. A communication apparatus, comprising:
a transceiver module, configured to receive capability information sent by a user equipment (UE), wherein the capability information indicates whether the UE supports a measurement capability when a time-domain conflict exists between different measurement gaps in multi-universal subscriber identity module (MUSIM) communication.

29. A communication system, comprising a user equipment (UE) and a network device, wherein
the UE is configured to send capability information to the network device, wherein the capability information indicates whether the UE supports a measurement capability when a time-domain conflict exists between different measurement gaps in multi-universal subscriber identity module (MUSIM) communication; and
the network device is configured to receive the capability information sent by the UE.

30. A communication device, comprising:
one or more processors, configured to invoke instructions to cause the communication device to implement the method according to any one of claims 1 to 16, or to implement the method according to any one of claims 17 to 26.

31. A storage medium storing instructions that, when executed on a communication device, cause the communication device to implement the method according to any one of claims 1 to 16, or to implement the method according to any one of claims 17 to 26.
